# DEMANDE DE BREVET EUROPEEN

(11) **EP 3 285 337 A2**
(43) Date de publication de la demande: **21.02.2018**
(21) Numéro de dépôt: 17185547.1
(22) Date de dépôt: 09.08.2017
(51) Int. Cl.: H01R 13/639, H01R 13/447, B60R 25/00

(54) **CONNECTEUR OBD D'ACCES A UNE UNITE MEMOIRE D'UN MODULE ELECTRONIQUE D'UN VEHICULE, DISPOSITIF DE VERROUILLAGE D'UN TEL CONNECTEUR, PROCEDE DE MONTAGE DU DISPOSITIF DE VERROUILLAGE ET GABARIT DE PERCAGE**

(30) Priorité: 18.08.2016 FR 1657814
(71) Demandeur: Dillmann, Jean-Claude, 68100 Mulhouse (FR)
(72) Inventeur: Dillmann, Jean-Claude, 68100 Mulhouse (FR)
(74) Mandataire: Koelbel, Caroline

(57) **Abrégé**

La présente invention concerne un dispositif de verrouillage (100) d'un connecteur OBD (10) d'accès à une unité mémoire d'un module électronique embarqué pour véhicule, ledit connecteur comportant une prise pourvue d'une pluralité de contacts électriques (14) contenus dans des ouvertures (13) d'un boîtier (11) embarqué dans ledit véhicule, lesdites ouvertures (13) débouchant sur une face de raccordement (15) dudit boitier (11). Le dispositif de verrouillage (100) comporte une plaque de recouvrement (101) qui couvre ladite face de raccordement (15) et est fixée audit boitier (11) par au moins une vis (16) sécurisée permettant ainsi de masquer ladite pluralité de contacts électriques (14) et d'interdire le couplage avec une prise complémentaire d'un appareil de lecture des données dudit module électronique embarqué.

## Description

### Domaine technique :

La présente invention concerne un connecteur OBD d'accès à une unité mémoire d'un module électronique embarqué équipant un véhicule, notamment un véhicule automobile, et dans lequel sont mémorisées les données opérationnelles dudit véhicule, ledit connecteur OBD comportant une prise pourvue d'une pluralité de contacts électriques contenus dans des ouvertures d'un boîtier destiné à être également embarqué dans ledit véhicule et débouchant sur une face de raccordement dudit boitier, ladite face de raccordement étant agencée pour être couplée ponctuellement à une prise complémentaire d'un appareil de lecture desdites données opérationnelles dudit module électronique embarqué, ledit connecteur OBD comportant en outre un dispositif de verrouillage agencé pour masquer ladite pluralité de contacts électriques débouchant sur ladite face de raccordement et pour interdire le couplage avec ladite prise complémentaire d'un appareil de lecture des données opérationnelles dudit module électronique embarqué, ledit dispositif de verrouillage comportant une plaque de recouvrement qui couvre et masque ladite face de raccordement.

Elle concerne également un dispositif de verrouillage d'un connecteur OBD d'accès à une unité mémoire d'un module électronique embarqué dans un véhicule, notamment dans un véhicule automobile.

Elle concerne enfin un procédé de montage d'un tel dispositif de verrouillage sur un connecteur OBD, et son gabarit de perçage.

Au cours des interventions de réparation et de maintenance de véhicules automobiles, les intervenants autorisés ont accès à l'ensemble des données relatives au véhicule, consignées dans une unité mémoire d'un module électronique embarqué et raccordée à un boîtier également placé dans le véhicule. Ce boitier est couramment appelé connecteur OBD (On Board Diagnostics) qui est habituellement une prise femelle permettant à un utilisateur, d'accéder aux données au moyen d'un appareil de lecture approprié. Cet appareil, habituellement utilisé pour des tests et des réglages, se connecte avec une prise mâle sur la prise femelle du connecteur OBD.

Un opérateur équipé de l'appareil de lecture est en mesure d'accéder à toutes les fonctionnalités du véhicule, y compris les équipements antivol, les commandes d'ouverture des portes, les équipements de déblocage du moteur et tous les éventuels éléments de sécurité électroniques, notamment les GPS permettant de suivre un véhicule volé. Certains véhicules sont équipés d'un dispositif électronique d'immobilisation automatique du véhicule et leur démarrage ne peut se faire que si le logiciel de gestion du véhicule le permet. En cas d'effraction, le véhicule est bloqué automatiquement et seule une manipulation des données embarquées au moyen d'un programme informatique approprié, permet de modifier lesdites données. Cette opération nécessite la possession dudit logiciel, mais également l'accès au connecteur OBD.

Or des appareils de lecture de données existent et sont proposés en vente libre, de sorte qu'ils peuvent être acquis sans difficultés par des voleurs de véhicules, qui sont ainsi en mesure de rendre inopérants tous les systèmes de protection antivol existants, même les plus sophistiqués et de modifier le paramétrage électronique des véhicules volés pour permettre leur utilisation sur la base de nouvelles données, annulant les données d'origine.

### Technique antérieure :

Divers dispositifs ont été développés pour tenter de rendre l'accès aux données mémorisées via le connecteur OBD difficile voire impossible. Les moyens mis en oeuvre concernent notamment la protection du connecteur OBD. En particulier, la publication EP 2 876 741 A1 décrit un boitier de protection pour un connecteur OBD qui a pour objectif de couvrir le connecteur même lorsqu'il est placé dans des endroits difficiles d'accès, pour rendre impossible le raccordement d'un appareil de lecture en empêchant le couplage d'une prise mâle sur la prise femelle du connecteur OBD.

La publication EP 2 879 244 A1 décrit une autre forme de réalisation d'un boîtier de protection destiné à recouvrir et protéger le connecteur OBD contre un accès non autorisé, et d'empêcher l'acquisition des données informatiques et leur modification, notamment celles qui concernent la protection antivol et les paramètres de fonctionnement du véhicule.

La publication JP 5083924 B1 décrit un boitier de protection pour recevoir l'ensemble du connecteur, fermé en face avant par un couvercle coulissant, lequel est verrouillé latéralement par un cylindre de serrure à clé pourvu d'un loquet pivotant.

Les boitiers de protection de l'état de l'art sont conçus pour recevoir l'ensemble du connecteur OBD. Ils sont volumineux et complexes du point de vue de leur construction. Ils nécessitent d'être mis en place avant la pose du connecteur OBD et ne sont généralement pas adaptés pour équiper en après-vente des connecteurs OBD déjà en place dans les véhicules. Ils sont également la plupart du temps équipés d'une serrure à clé, occupant une place importante. Ces boitiers de protection ne sont donc pas prévus pour pouvoir se loger dans des volumes du véhicule très restreints et difficiles d'accès. Ces solutions ne sont pas ergonomiques ni optimales.

La publication DE 20 2014 001 790 U1 décrit un boitier de protection en acier emboité latéralement entre le boitier de fixation du connecteur et le connecteur, qui doit également être mis en place lors du montage du connecteur. Il se présente sous la forme d'un tiroir dont une partie inférieure est fixée au boitier de fixation du connecteur par une pluralité de premières vis, et une partie supérieure est fixée au boitier de fixation du connecteur par une pluralité de deuxièmes vis. Cette solution est complexe, encombrante et nécessite le démontage de plusieurs vis avant d'atteindre la face de raccordement pour permettre à un opérateur autorisé d'intervenir.

La publication GB 2 510 099 A décrit un autre type de dispositif de verrouillage prenant la forme d'un boîtier de protection qui s'emboite sur le connecteur OBD et qui se fixe avec ledit connecteur dans un support du véhicule par des vis de fixation sécurisées au travers des pattes de fixation dudit connecteur. Cet agencement sécurisé est toutefois contraignant en terme de manipulation pour accéder aux vis de fixation du connecteur OBD, les dévisser, retirer le boitier de protection et accéder au connecteur OBD lors d'une intervention effectuée par un opérateur autorisé, puis pour remettre en place le boitier de protection après intervention.

La publication US 5 547 388 propose un boitier de protection qui s'emboite sur le connecteur OBD pour le recouvrir complètement, qui est maintenu sur le connecteur par élasticité du boitier, et qui est fixé à l'arrière du connecteur par une bague de fixation autour du faisceau de câble alimentant ledit connecteur. Dans cette solution, l'accès au connecteur OBD n'est absolument pas sécurisé étant donné que le boitier peut être écarté de la face de raccordement du connecteur OBD par simple traction sur ledit boitier, sans aucun outillage.

La publication EP 2 982 549 A1 décrit un système, qui, grâce à un programme informatique, permet d'empêcher l'accès non autorisé à l'électronique du véhicule par l'intermédiaire du connecteur OBD et assure de cette manière la protection contre le vol par le déverrouillage du dispositif d'immobilisation. Cette solution n'est pas infaillible, puisqu'un programme informatique n'est jamais à l'abri de piratages de sorte que l'accès aux données n'est pas sécurisé.

### Exposé de l'invention :

La présente invention se propose de pallier les inconvénients mentionnés ci-dessus en réalisant un connecteur OBD pour un véhicule, notamment un véhicule automobile aussi bien à usage utilitaire qu'à usage privé, équipé d'un dispositif de verrouillage sécurisé pour empêcher la connexion d'une prise complémentaire à sa prise de sortie, en interdisant ainsi la connexion d'un appareil de lecture des données embarquées du véhicule, empêchant à la fois la lecture des données existantes et l'écriture de nouvelles données en remplacement des données existantes, ce dispositif de verrouillage étant simple, peu coûteux, de faible encombrement, inviolable, ergonomique, facile à monter et à utiliser, adapté pour équiper aussi bien des connecteurs OBD existants en après-vente déjà montés sur des véhicules, que des connecteurs OBD neufs en première monte sur un véhicule.

Dans ce but, l'invention concerne un connecteur OBD tel que défini en préambule, caractérisé en ce que ladite plaque de recouvrement qui couvre et masque ladite face de raccordement est fixée au boitier dudit connecteur OBD par au moins une vis sécurisée, traversant ladite plaque de recouvrement, et engagée dans un alésage traversant ménagé dans l'épaisseur dudit boitier, perpendiculairement à ladite face de raccordement.

Selon un mode de réalisation préféré, ladite au moins une vis sécurisée comporte une tête noyée dans un chanfrein ménagé dans l'épaisseur de ladite plaque de recouvrement, ladite tête pouvant être pourvue avantageusement d'une empreinte codée agencée pour coopérer avec un outil de vissage/dévissage ayant un embout dont le profil est complémentaire à celui de ladite empreinte codée.

Selon un premier mode de réalisation de l'invention, ledit alésage est fileté intérieurement sur toute ou partie de sa longueur et agencé pour recevoir ladite au moins une vis sécurisée, ledit alésage et ladite vis sécurisée ayant des filetages complémentaires.

Selon un deuxième mode de réalisation, le dispositif de verrouillage comporte au moins une platine de maintien, fixée sur une surface dudit boitier, opposée à ladite face de raccordement, ladite platine de maintien comportant une ouverture filetée au droit dudit alésage et agencée pour recevoir ladite au moins une vis sécurisée, l'ouverture de ladite platine de maintien et ladite vis sécurisée ayant des filetages complémentaires.

Selon un troisième mode de réalisation, le dispositif de verrouillage comporte au moins un insert tubulaire logé dans ou formant ledit alésage, ledit insert tubulaire s'étendant sur toute ou partie de la longueur dudit alésage, étant fileté intérieurement sur toute ou partie de sa longueur et agencé pour recevoir ladite au moins une vis sécurisée, ledit insert tubulaire et ladite vis ayant des filetages complémentaires.

Selon une variante, ledit insert tubulaire comporte une portion d'extrémité, fixée dans une ouverture ménagée dans une platine de maintien, fixée sur une face dudit boitier, opposée à ladite face de raccordement.

Lorsque ledit connecteur OBD comporte un boitier de forme sensiblement parallélépipédique, ledit insert tubulaire peut avoir une longueur égale à l'épaisseur dudit boitier augmentée ou non de l'épaisseur de ladite platine selon qu'il est vissé ou non dans ladite platine de maintien.

Ledit insert tubulaire fileté peut être surmoulé dans l'épaisseur dudit boitier, notamment lorsqu'il s'agit de connecteurs OBD neufs. Il peut également être soudé et/ou collé dans l'alésage traversant ledit boitier notamment lorsqu'il s'agit de connecteurs OBD existants.

La plaque de recouvrement dudit dispositif de verrouillage peut être avantageusement entourée en partie ou en totalité d'une paroi périphérique et former avec elle une coque de centrage de forme sensiblement complémentaire audit boitier.

Dans la forme de réalisation préférée de l'invention, ledit alésage est ménagé dans une partie centrale dudit boitier.

L'invention concerne également un dispositif de verrouillage pour un connecteur OBD, caractérisé en ce qu'il comporte au moins un orifice traversant ménagé dans ladite plaque de recouvrement et au moins une vis sécurisée engagée dans ledit orifice traversant, pour fixer ladite plaque de recouvrement au boitier dudit connecteur OBD par au moins une vis sécurisée engagée dans un alésage ménagé dans ledit boitier, lorsque ledit dispositif de verrouillage est associé audit connecteur OBD.

L'invention concerne enfin un procédé de montage du dispositif de verrouillage, caractérisé en ce que l'on réalise dans l'épaisseur du boitier du connecteur OBD au moins un alésage traversant, perpendiculairement à la face de raccordement, en ce que l'on positionne sur la face de raccordement de ce boitier la plaque de recouvrement du dispositif de verrouillage pour masquer ladite pluralité de contacts électriques, et en ce que l'on fixe ladite plaque de recouvrement du dispositif de verrouillage au boitier dudit connecteur OBD par au moins une vis sécurisée engagée dans ledit alésage.

De manière avantageuse, l'on réalise ledit au moins un alésage dans une partie centrale du boîtier dudit connecteur OBD.

Pour réaliser ledit au moins un alésage dans l'épaisseur du boitier d'un connecteur OBD, l'on utilise avantageusement un gabarit de perçage comportant une coque de centrage qui se superpose audit boitier du connecteur OBD en épousant son contour, et un tube de guidage et de centrage pour guider et centrer un foret de perçage au travers dudit boitier.

L'invention concerne en outre un gabarit de perçage facilitant la mise en oeuvre du procédé de montage d'un dispositif de verrouillage sur un connecteur OBD.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels :
- la figure 1 est une vue de dessus simplifiée illustrant un connecteur OBD destiné à être monté dans un véhicule,
- la figure 2 est une vue en perspective cavalière d'un dispositif de verrouillage selon l'invention superposé au connecteur OBD de la figure 1,
- la figure 3 est une vue en coupe axiale du dispositif de verrouillage de la figure 2,
- les figures 4A-G sont des vues en plan qui illustrent des empreintes codées de têtes de vis sécurisées pour le dispositif de verrouillage selon l'invention,
- les figures 5, 6 et 7 sont des vues en coupe axiale du connecteur OBD illustrant d'autres formes de réalisation du dispositif de verrouillage selon l'invention, et
- la figure 8 est une vue en coupe axiale illustrant un gabarit de perçage pour faciliter le montage du dispositif de verrouillage sur un connecteur OBD selon l'invention.

### Illustrations de l'invention et différentes manières de la réaliser :

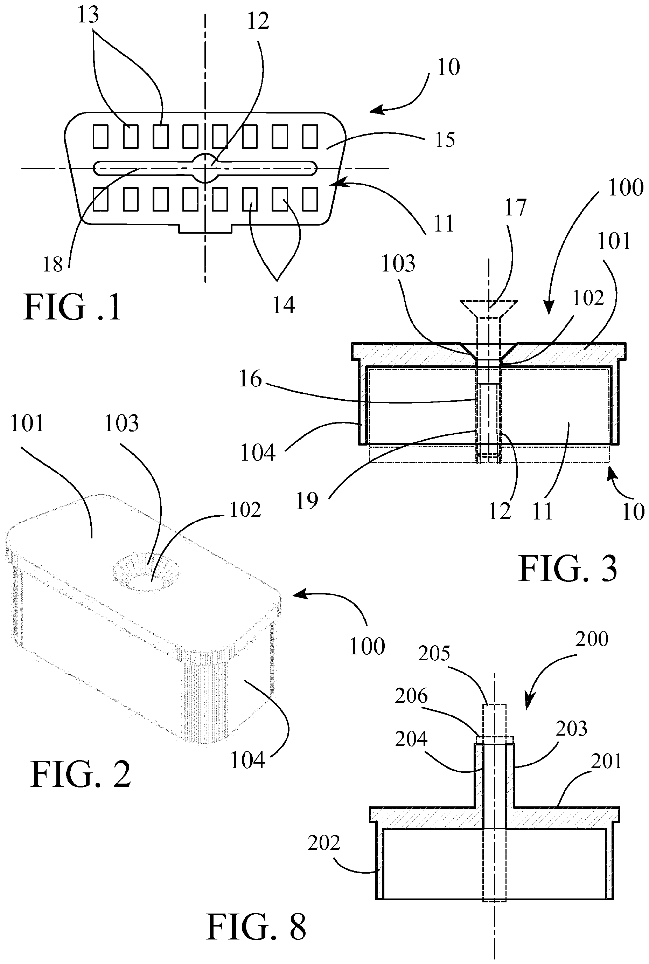

En référence aux figures 1, 5, 6 et 7, le connecteur OBD 10 représenté comporte un boitier 11 qui est monté à l'intérieur d'un véhicule, généralement à un endroit masqué, comme par exemple sous le tableau de bord, au moyen de supports qui peuvent se présenter sous différentes formes, selon le constructeur du véhicule. La face apparente du boitier 11 du connecteur OBD 10, appelée par la suite « face de raccordement 15 », telle que représentée à la figure 1, comporte une pluralité d'ouvertures 13 qui sont des cavités dans lesquelles sont logés des contacts électriques 14 raccordés, par la face arrière dudit connecteur OBD 10, à un module électronique (non représenté). Ledit module électronique stocke quasiment toutes les données opérationnelles du véhicule. Lors d'un service, d'une réparation, d'un paramétrage des données, ces contacts électriques 14, logés dans le boitier 11 du connecteur OBD 10, qui correspond généralement à une prise femelle, sont connectés à des contacts électriques d'un appareil de lecture desdites données, par l'intermédiaire d'une prise mâle complémentaire (non représentée) qui doit être couplée à ladite prise femelle de ce connecteur. Le boitier 11 comporte généralement une fente centrale 18 débouchant dans la face de raccordement 15 et s'étendant entre les deux rangées d'ouvertures 13, pour recevoir une languette de forme complémentaire généralement prévue sur la prise male de l'appareil de lecteur. Ce type de connecteur OBD 10 constitue généralement une pièce standard pour faciliter la compatibilité avec les appareils de lecture mais l'exemple représenté n'est pas limitatif.

L'accès aux données électroniques du véhicule est en principe réservé à des personnes autorisées et il est essentiel que cet accès soit rendu impossible, ou du moins difficile pour des personnes non autorisées, tel que par exemple des voleurs de véhicules. La présente invention a pour objet de réaliser un dispositif de verrouillage 100 pour empêcher un accès aisé à des personnes mal intentionnées. La figure 2 représente une forme de réalisation d'un dispositif de verrouillage 100 qui est emboité par-dessus la face de raccordement 15 et se superpose complètement au boitier 11 du connecteur OBD 10. Ainsi, il peut être installé et retiré du connecteur OBD 10 facilement sans avoir à démonter ledit connecteur OBD 10. De ce fait, la face de raccordement 15 du boitier 11 est recouverte intégralement d'une plaque de recouvrement 101 appartenant audit dispositif de verrouillage 100, qui obture les ouvertures 13 et masque les contacts électriques 14 de la prise femelle du connecteur OBD 10 de manière très simple et rapide.

La plaque de recouvrement 101 du dispositif de verrouillage 100 est réalisée avantageusement en un matériau mécaniquement très résistant tel qu'un acier, traité ou non, un alliage métallique, une matière synthétique ou composite renforcée ou non par des charges, ou similaire. Cette plaque de recouvrement 101 peut être utilisée seule (variante non représentée), ou entourée en partie ou en totalité d'une paroi périphérique104 adaptée pour épouser sensiblement le contour extérieur du boîtier 11 du connecteur OBD 10 et former avec ladite plaque de recouvrement 101 une coque de centrage venant chevaucher et épouser le connecteur OBD 10. Dans ce cas, la plaque de recouvrement 101 peut être surmoulée dans le fond de la coque de centrage, ou formée d'une pièce monobloc avec la coque de centrage. Cette forme de réalisation avantageuse permet de faciliter la mise en place du dispositif de verrouillage 100 sur le connecteur OBD 10 en permettant l'alignement de la vis 16 sécurisée avec l'alésage 12 prévu dans le boitier 11 du connecteur OBD 10, comme expliqué ci-après.

Le but recherché est d'empêcher le déverrouillage puis le retrait de ladite plaque de recouvrement 101. A cet effet, une des solutions consiste à fixer de manière sécurisée, cette plaque de recouvrement 101 sur le boitier 11 du connecteur OBD 10, par exemple au moyen d'au moins une vis 16 sécurisée, engagée dans un orifice traversant 102 ménagé dans l'épaisseur de la plaque de recouvrement 101, puis vissée directement ou indirectement dans un alésage 12, de préférence traversant, ménagé dans l'épaisseur du boitier 11. Cet alésage 12 est de préférence réalisé perpendiculairement à la face de raccordement 15 du boitier 11. Ainsi, tout comme la face de raccordement 15 du boitier 11, l'alésage 12 est accessible quel que soit l'emplacement du connecteur OBD 10 dans le véhicule pour simplifier l'accès au dispositif de verrouillage 100. La vis 16 sécurisée a de préférence une tête 17 conique, noyée dans un chanfrein 103 qui est ménagé dans l'épaisseur de la plaque de recouvrement 101 par usinage ou moulage, ce qui rend difficile, voire impossible d'accéder à la tête 17 de la vis 16 notamment par un outil d'arrachage ou de cisaillement. Le chanfrein 103 peut être remplacé par un lamage (non représenté) si la forme de la tête 17 de la vis 16 est cylindrique ou par toute forme en creux adaptée à la tête 17 de la vis 16. On rajoute une complication au fait que la tête 17 de la vis 16 est noyée et empêche ainsi toute prise avec un outil classique tel un tournevis courant, ou une pince du type multiprise par l'existence d'une empreinte codée 17a-17g prévue dans la tête 17 de la vis 16, qui nécessite un outil ayant un embout correspondant audit profil de l'empreinte codée 17a-17g. On choisira une vis 16 sécurisée avec un filetage à gauche pour compliquer davantage la fraude. Dans les différents exemples illustrés de l'invention, le dispositif de verrouillage 100 n'est représenté qu'avec une seule vis 16, cette vis étant centrale et alignée sur l'alésage 12 ménagé, de préférence dans la partie centrale du boitier 11 du connecteur OBD 10, qui est généralement libre de tout contact électrique 14. La coque de centrage associée à la plaque de recouvrement 101 facilite grandement la mise en place du dispositif de verrouillage 100 sur le connecteur OBD 10 par auto-centrage de la vis 16 par rapport à l'alésage 12. Bien entendu, l'invention s'étend à tout autre dispositif de verrouillage 100 similaire fixé avec une seule vis 16 sécurisée mais vissée dans un alésage 12 décentré par rapport au boîtier 11, ou avec plusieurs vis 16 sécurisées vissées dans plusieurs alésages 12 du boitier 11.

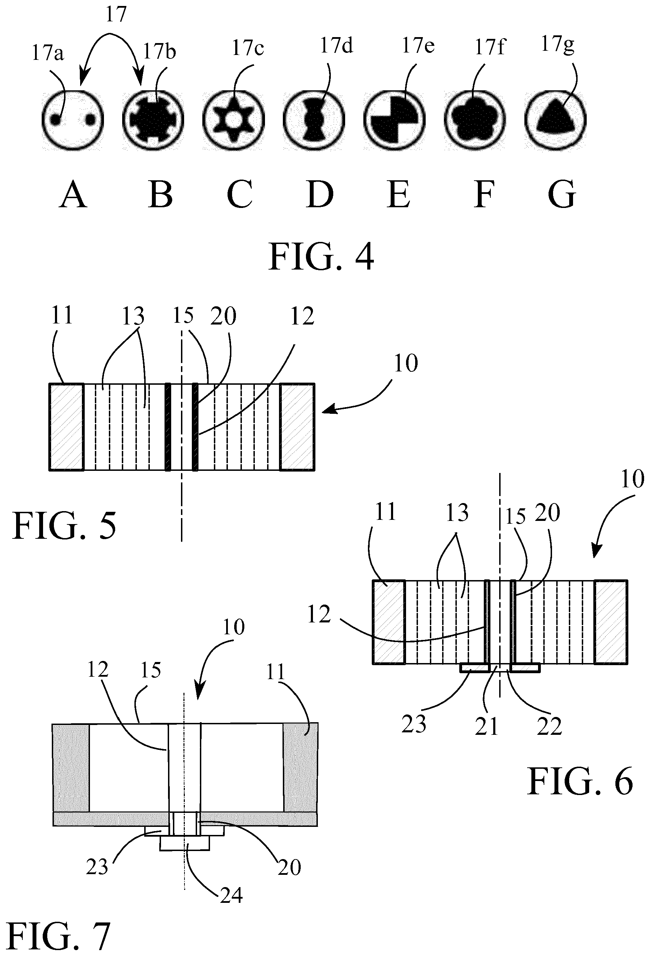

A titre d'exemple, les figures 4A à G représentent différentes empreintes codées 17a à 17g susceptibles d'empêcher ou de compliquer le dévissage de la vis 16 sécurisée, lorsqu'elle est vissée sur le boitier 11 du connecteur OBD 10 à travers la plaque de recouvrement 101 du dispositif de verrouillage 100, pour empêcher l'accès aux contacts électriques 14. Les empreintes codées 17a à 17g peuvent être modifiées quasiment à l'infini, et certains propriétaires de véhicules pourront même faire réaliser leur propre empreinte codée personnalisée et l'outil de vissage/dévissage adéquat, pour accroître le facteur sécurité antivol de leur voiture. En effet, le vol des véhicules se fait le plus souvent de façon rapide, les voleurs opérant la plupart du temps lorsqu'ils détectent une opportunité. Si l'opération s'avère trop compliquée, la majorité des voleurs potentiels renonce en recherchant une meilleure opportunité. De ce fait, rendre l'accès au connecteur OBD 10 plus compliqué pour faire perdre du temps à un voleur, constitue en soi déjà une bonne protection.

La vue en coupe axiale de la figure 3 montre une première forme de réalisation du dispositif de verrouillage 100 de la figure 2, superposé au connecteur OBD 10 illustré schématiquement en traits interrompus, dans lequel la vis 16 sécurisée est en cours de vissage dans l'alésage 12 ménagé dans le boitier 11 du connecteur OBD 10, cet alésage 12 comportant un filetage intérieur 19 correspondant au filetage de la vis 16 sécurisée. Ce filetage intérieur 19 peut s'étendre sur toute ou partie de la longueur de l'alésage 12 et par exemple limité à la partie inférieure du boitier 11.

Une autre forme de réalisation du dispositif de verrouillage 100 est illustrée par la figure 5 qui illustre un boitier 11 d'un connecteur OBD 10 dans lequel est monté un insert tubulaire 20 pour recevoir la vis 16 sécurisée. Cet insert tubulaire 20 est solidarisé audit boitier 11 par tout moyen approprié, et peut s'étendre sur toute ou partie de l'épaisseur de ce boitier en étant par exemple limité à la partie inférieure du boitier 11. Il peut être directement intégré au connecteur OBD 10 lors de sa fabrication en étant par exemple surmoulé axialement dans l'épaisseur du boitier 11 pour former l'alésage 12. Il peut être également rapporté, notamment sur les connecteurs OBD 10 déjà existants, suite à la mise en place dans un alésage 12 traversant ménagé dans l'épaisseur du boitier 11, puis collé ou soudé dans ledit alésage. L'insert tubulaire 20 est réalisé de telle manière qu'il permet la fixation de la vis 16 sécurisée par vissage, et comporte à cet effet un filetage intérieur qui correspond à celui de la vis et peut s'étendre sur toute ou partie de la longueur dudit insert. A titre de variante, l'insert tubulaire 20 peut être soudé ou collé dans le boitier 11, ou encore vissé dans le boitier 11, si l'insert tubulaire 20 est fileté extérieurement. Dans ce cas, le filetage extérieur de l'insert tubulaire 20 devrait être auto-taraudant, ou l'alésage 12 lui-même devrait être fileté intérieurement en partie ou en totalité, le taraudage extérieur de l'insert tubulaire 20 devant correspondre au filetage intérieur 19 de l'alésage 12. Cet alésage 12 peut être réalisé aisément dans tout connecteur OBD 10 existants, au moyen par exemple d'un gabarit de perçage, et de préférence dans la partie centrale du boîtier 11.

La figure 8 illustre un exemple de gabarit de perçage 200 qui peut être fourni à des personnes agréées pour modifier les connecteurs OBD 10 déjà en circulation. Ce gabarit de perçage 200 a sensiblement la même forme que le dispositif de verrouillage 100 et comporte une plaque de recouvrement 201 entourée d'une paroi périphérique 202 pour former une coque de centrage qui se superpose au boitier 11 du connecteur OBD 10 en épousant son contour. Il comporte un tube de guidage et de centrage 203 qui s'étend perpendiculairement de la plaque de recouvrement 201 à l'opposé de la paroi périphérique 202 et définit un alésage 204 traversant. La position et le diamètre du tube de guidage et de centrage 203 déterminent la position et le diamètre de l'alésage 12 à réaliser dans le boitier 11 du connecteur OBD 10 pour fixer le dispositif de verrouillage 100. On choisira principalement une position centrale par rapport au boitier 11, par exemple superposée à la fente centrale 18 située entre les deux rangées de contacts électriques 14. Pour réaliser le perçage, on installe ce gabarit de perçage 200 sur le boitier 11 du connecteur OBD 10, et on perce ledit boitier 11 au moyen d'un foret 205 au travers du tube de guidage et de centrage 203. On peut ajouter une butée de perçage 206 sur le foret 205 pour ajuster la profondeur de perçage, par exemple à l'épaisseur du boitier 11 du connecteur OBD 10. Grâce au gabarit de perçage 200, l'opération de perçage est précise, rapide et réalisable sur tout type de connecteur OBD 10 ou similaire, même sur un connecteur OBD 10 déjà monté sur un véhicule.

Dans une autre variante de réalisation illustrée à la figure 6, et pour sécuriser davantage la liaison de l'insert tubulaire 20 et du boitier 11, l'insert tubulaire 20 peut comporter un tronçon d'extrémité 21 qui peut être fixé dans une ouverture 22 d'une platine de maintien 23 qui est placée contre la face inférieure du boitier 11 du connecteur OBD 10. Cette fixation peut être obtenue par vissage, collage, soudage ou similaire. Cette solution permet de renforcer le maintien de l'insert tubulaire 20 dans le boitier 11 et rend impossible le retrait de l'insert tubulaire 20 et par conséquent l'extraction de la vis 16 sécurisée et l'éloignement de la plaque de recouvrement 101 du dispositif de verrouillage 100.

La figure 7 illustre encore une autre variante de réalisation dans laquelle l'insert tubulaire 20 fileté intérieurement, est localisé dans la partie inférieure du boitier 11 du connecteur OBD 10 (représenté schématiquement sans les ouvertures 13) de façon à ne pas entrer en conflit avec la fente centrale 18. Il peut être utilisé seul (non représenté) ou lié à un écrou 24 fixé à l'arrière du boitier 11 du connecteur OBD 10 à l'opposé de la face de raccordement 15. Une rondelle 25 peut être prévue entre l'écrou 24 et la face inférieure du boitier 11. L'alésage 12 peut être lisse et l'insert 20 peut être collé ou soudé dans la partie inférieure du boitier 11. L'alésage 12 peut être fileté et l'insert 20 peut être fileté extérieurement pour se visser dans l'alésage 12 et intérieurement pour visser la vis 16 sécurisée. Dans ce cas, les filetages peuvent être inversés.

Dans une autre forme de réalisation non représentée, la vis 16 sécurisée peut être uniquement vissée dans une ouverture 22 filetée prévue dans une platine de maintien 23, fixée à l'arrière du boitier 11 du connecteur OBD 10, à l'opposé de la face de raccordement 15, comme celle représentée à la figure 6. Dans ce cas, l'alésage 12 et/ou l'insert tubulaire 20 peuvent ne pas comporter de filetage intérieur 19.

Il est bien entendu possible de combiner les différentes formes de réalisation décrites du dispositif de verrouillage 100 et d'imaginer d'autres combinaisons sans sortir de l'invention. La présente invention n'est pas limitée aux exemples de réalisation décrits mais s'étend à toute modification et variante évidentes pour un homme du métier.

## Revendications

1. Connecteur OBD (10) d'accès à une unité mémoire d'un module électronique embarqué équipant un véhicule, notamment un véhicule automobile, et dans lequel sont mémorisées les données opérationnelles dudit véhicule, ledit connecteur OBD (10) comportant une prise pourvue d'une pluralité de contacts électriques (14) contenus dans des ouvertures (13) d'un boîtier (11) destiné à être embarqué dans ledit véhicule, lesdites ouvertures (13) débouchant sur une face de raccordement (15) dudit boitier, ladite face de raccordement (15) étant agencée pour être couplée ponctuellement à une prise complémentaire d'un appareil de lecture desdites données opérationnelles dudit module électronique embarqué, ledit connecteur OBD (10) comportant en outre un dispositif de verrouillage (100) agencé pour masquer ladite pluralité de contacts électriques (14) débouchant sur ladite face de raccordement (15) du boitier (11) et pour interdire le couplage avec ladite prise complémentaire d'un appareil de lecture des données opérationnelles dudit module électronique embarqué, ledit dispositif de verrouillage (100) comportant une plaque de recouvrement (101) qui couvre et masque ladite face de raccordement (15) du boitier (11), **caractérisé en ce que** ladite plaque de recouvrement (101) qui couvre et masque ladite face de raccordement (15) est fixée audit boitier (11) du connecteur OBD (10) par au moins une vis (16) sécurisée, traversant ladite face de raccordement (15), et engagée dans un alésage (12) traversant, ménagé dans l'épaisseur dudit boitier (11), perpendiculairement à ladite face de raccordement (15).

2. Connecteur OBD selon la revendication 1, **caractérisé en ce que** ledit alésage (12) est fileté intérieurement sur toute ou partie de sa longueur pour y recevoir ladite au moins une vis (16) sécurisée par vissage.

3. Connecteur OBD selon la revendication 1, **caractérisé en ce que** ledit dispositif de verrouillage (100) comporte au moins une platine de maintien (23), fixée sur une face dudit boitier (11), opposée à ladite face de raccordement (15), ladite platine de maintien (23) comportant une ouverture (22) filetée au droit dudit alésage (12) pour y recevoir ladite au moins une vis (16) sécurisée par vissage.

4. Connecteur OBD selon la revendication 1, **caractérisé en ce que** ledit dispositif de verrouillage (100) comporte au moins un insert tubulaire (20) logé dans ou formant ledit alésage (12), ledit insert tubulaire (20) s'étendant sur toute ou partie de la longueur dudit alésage (12) et étant fileté intérieurement sur toute ou partie de sa longueur pour y recevoir ladite au moins une vis (16) sécurisée par vissage.

5. Connecteur OBD selon la revendication 4, **caractérisé en ce que** ledit insert tubulaire (20) comporte une portion d'extrémité (21) fixée dans une ouverture (22) ménagée dans une platine de maintien (23), elle-même fixée sur une face dudit boitier (11), opposée à ladite face de raccordement (15).

6. Connecteur OBD selon la revendication 4, **caractérisé en ce que** ledit insert tubulaire (20) est surmoulé dans l'épaisseur dudit boitier (11).

7. Connecteur OBD selon la revendication 4, **caractérisé en ce que** ledit insert tubulaire (20) est soudé et/ou collé dans ledit alésage (12).

8. Connecteur OBD selon l'une quelconque des revendications précédentes, **caractérisé en ce que** ladite plaque de recouvrement (101) du dispositif de verrouillage (100) est entourée en partie ou en totalité d'une paroi périphérique (102) et forme avec elle une coque de centrage de forme sensiblement complémentaire audit boitier (11).

9. Connecteur OBD selon l'une quelconque des revendications précédentes, **caractérisé en ce que** ledit au moins un alésage (12) est ménagé dans une partie centrale dudit boitier (11).

10. Dispositif de verrouillage (100) pour un connecteur OBD (10) d'accès à une unité mémoire d'un module électronique embarqué dans un véhicule, notamment dans un véhicule automobile, selon l'une quelconque des revendications précédentes, ledit dispositif étant agencé pour masquer ladite pluralité de contacts électriques (14) débouchant sur ladite face de raccordement (15) du boitier (11) dudit connecteur OBD et pour interdire le couplage avec ladite prise complémentaire d'un appareil de lecture des données opérationnelles dudit module électronique embarqué, ledit dispositif de verrouillage (100) comportant une plaque de recouvrement (101) agencée pour couvrir et masquer ladite face de raccordement (15) dudit boitier (11), **caractérisé en ce qu'**il comporte au moins un orifice traversant (102) ladite plaque de recouvrement (101) et au moins une vis (16) sécurisée engagée dans ledit orifice traversant (102) pour fixer ladite plaque de recouvrement (101) audit boitier (11) du connecteur OBD (10) lorsque ledit dispositif de verrouillage (100) est associé audit connecteur OBD (10).

11. Dispositif de verrouillage selon la revendication 10, **caractérisé en ce que** ladite au moins une vis (16) sécurisée comporte une tête (17) noyée dans un chanfrein (103) ménagé dans l'épaisseur de ladite plaque de recouvrement (101).

12. Dispositif de verrouillage selon la revendication 10, **caractérisé en ce que** ladite au moins une vis (16) sécurisée comporte une tête (17) pourvue d'une empreinte codée (17a-17g), agencée pour coopérer avec un outil de vissage/dévissage ayant un embout dont le profil est complémentaire à celui de ladite empreinte codée (17a-17g).

13. Dispositif de verrouillage selon la revendication 10, **caractérisé en ce qu'**il comporte au moins une platine de maintien (23) pourvue d'une ouverture (22) filetée agencée pour y recevoir ladite au moins une vis (16) sécurisée par vissage, ladite platine de maintien (23) étant destinée à être fixée sur une face dudit boitier (11) opposée à ladite face de raccordement (15) du connecteur OBD (10) lorsque ledit dispositif de verrouillage (100) est associé audit connecteur OBD (10).

14. Dispositif de verrouillage selon la revendication 10, **caractérisé en ce qu'**il comporte au moins un insert tubulaire (20) fileté intérieurement sur toute ou partie de sa longueur et agencé pour y recevoir ladite au moins une vis (16) sécurisée par vissage, ledit insert tubulaire (20) étant destiné à être logé dans ou former ledit alésage (12) prévu dans ledit boitier (11) du connecteur OBD (10) lorsque ledit dispositif de verrouillage (100) est associé audit connecteur OBD (10).

15. Dispositif de verrouillage selon la revendication 14, **caractérisé en ce que** ledit insert tubulaire (20) comporte une portion d'extrémité (21) fixée dans une ouverture (22) ménagée dans une platine de maintien (23), ladite platine de maintien (23) étant destinée à être fixée sur une face dudit boitier (11) opposée à ladite face de raccordement (15) du connecteur OBD (10) lorsque ledit dispositif de verrouillage (100) est associé audit connecteur OBD (10).

16. Dispositif de verrouillage selon l'une quelconque des revendications 10 à 15, **caractérisé en ce que** ladite plaque de recouvrement (101) est entourée en partie ou en totalité d'une paroi périphérique (104) et forme avec elle une coque de centrage.

17. Dispositif de verrouillage selon la revendication 10, **caractérisé en ce que** ledit au moins un orifice traversant (102) dans lequel est engagée ladite au moins une vis (16) sécurisée est disposé dans une partie centrale de ladite plaque de recouvrement (101).

18. Procédé de montage du dispositif de verrouillage (100) selon l'une quelconque des revendications 10 à 17 sur un connecteur OBD (10) selon l'une quelconque des revendications 1 à 9, **caractérisé en ce que** l'on réalise dans l'épaisseur du boitier (11) dudit connecteur OBD (10) au moins un alésage (12) traversant, perpendiculairement à la face de raccordement (15), **en ce que** l'on positionne sur ladite face de raccordement (15) de ce boitier (11) la plaque de recouvrement (101) dudit dispositif de verrouillage (100) pour masquer ladite pluralité de contacts électriques (14), et **en ce que** l'on fixe ladite plaque de recouvrement (101) audit boitier (11) par au moins une vis (16) sécurisée passant à travers l'orifice traversant (102) de ladite plaque de recouvrement (101) et engagée dans ledit alésage (12).

19. Procédé de montage selon la revendication 18, **caractérisé en ce que**, pour réaliser ledit au moins un alésage (12) dans l'épaisseur du boitier (11) dudit connecteur OBD (10), l'on utilise un gabarit de perçage (200) comportant une coque de centrage (201, 202) qui se superpose audit boitier (11) du connecteur OBD (10) en épousant son contour et qui est pourvue d'un tube de guidage et de centrage (203) pour guider un foret de perçage au travers dudit boitier (11).

20. Gabarit de perçage (200) pour mettre en oeuvre le procédé de montage selon la revendication 19, **caractérisé en ce qu'**il comporte une coque de centrage (201, 202) destinée à se superposer audit boitier (11) du connecteur OBD (10) en épousant son contour, et **en ce que** ladite coque de centrage (201, 202) est pourvue d'un tube de guidage et de centrage (203) destiné à guider un foret de perçage au travers dudit boitier (11) lorsque ledit gabarit de perçage (200) est assemblé audit connecteur OBD (10).
